# EUROPEAN PATENT SPECIFICATION

(11) **EP 4 442 426 B1**
(45) Date of publication and mention of the grant of the patent: **28.10.2026**
(21) Application number: 24164629.8
(22) Date of filing: 19.03.2024
(51) Int. Cl.: B29C 45/33, B21D 22/22, B21D 51/44, B21D 51/48, B21D 53/48, B22C 9/06, B22D 17/24, B65D 41/12, B29C 33/76, B29C 33/44

(54) **DIE AND MOULDING APPARATUS**
MATRIZE UND FORMVORRICHTUNG
MOULE ET APPAREIL DE MOULAGE

(30) Priority: 03.04.2023 IT 202300006546
(43) Date of publication of application: 09.10.2024
(73) Proprietor: SACMI Cooperativa Meccanici Imola Società Cooperativa, 40026 Imola (BO) (IT)
(72) Inventor: BERGAMI, Stefano, 40024 Castel S. Pietro Terme (BO) (IT); MIRRI, Marco, 48024 Massalombarda (RA) (IT)
(74) Representative: Luppi Intellectual Property S.r.l.

(56) References cited:
- CA-A1- 2 889 308
- US-A- 3 490 635

## Description

### Background of the invention

The invention relates to a moulding die and a moulding apparatus that includes the moulding die, in particular for moulding shells of crown closures that are usable for sealing a mouth of a container like, for example, a bottle containing pressurized liquids like, for example, carbonated beverages.

Specifically, but not exclusively, the invention relates to moulding of a shell of a crown closure made of metal material and provided with a corrugated skirt wall, in which the crown closure is intended to be applied to an upper mouth of a container by a capping device that presses the corrugated skirt wall in a radial direction towards the neck of the container to make an undercut coupling that retains the closure on the neck.

Patent publication GB 659 200 A shows a moulding die with a die body that defines a cavity suitable for moulding a shell of a crown closure along a moulding axis and a number N of recesses arranged circumferentially around a moulding axis to form a number N of corrugations of a corrugated skirt wall of the shell.

Further moulding dies are disclosed in CA 2 889 308 A1 and US 3 490 635 A.CA 2 889 308 A1 discloses a moulding die as in the preamble of claim 1.

Various aspects of prior-art moulding dies are improvable.

It is desirable to improve the method of moulding the skirt wall and the corrugations of the shell to obtain a crown closure that, despite being moulded from a relatively thin sheet of sheet metal, is nevertheless able to withstand relatively high pressure inside the container. It is also desirable to improve the method of moulding the shell to obtain a crown closure with great flexibility, to facilitate capping operations, and at the same time considerable resistance, to keep the container hermetically sealed.

### Summary of the invention

One object of the invention is to make a moulding die that is able to overcome one or more of the aforesaid limits and drawbacks of the prior art.

One object of the invention is to provide a moulding die that is suitable for moulding shells of crown closures and is alternative to prior-art moulding dies.

One advantage is providing a moulding die able to mould by plastic deformation a shell of a crown closure and obtain a crown closure of great quality with optimal sealing performance.

One advantage is to make a crown closure with a shell moulded from a relatively thin sheet of sheet metal and capable of effectively closing a container, withstanding relatively high pressure.

One advantage is to obtain a crown closure with great flexibility to facilitate capping operations and at the same time with considerable resistance, to keep the container hermetically sealed.

One advantage is to make available a moulding die and a moulding apparatus that are constructionally simple and cheap.

In one embodiment, a die comprises an external part and an internal part, each of which has a set of teeth or protrusions that are inserted into one another and are movable reciprocally in an axial direction, an internal core, which is movable with respect to the internal part, and elastic means that operates with an axial elastic force on the core. The corresponding movement between the external part and the internal part, in combination with the corresponding sprung movement between the internal core and the internal part improve the features of the plastic deformation that produces the corrugations and ensure also long-term effective sealing.

### Short description of the drawings

The invention can be better understood and implemented with reference to the enclosed drawings that illustrate an embodiment thereof by way of non-limiting example, in which:
figure 1 is a section in vertical elevation of a first embodiment of a moulding apparatus made in accordance with the present invention, in which the moulding apparatus is, on the left, in a configuration that precedes moulding of the crown shell and, on the right, in a moulding configuration;

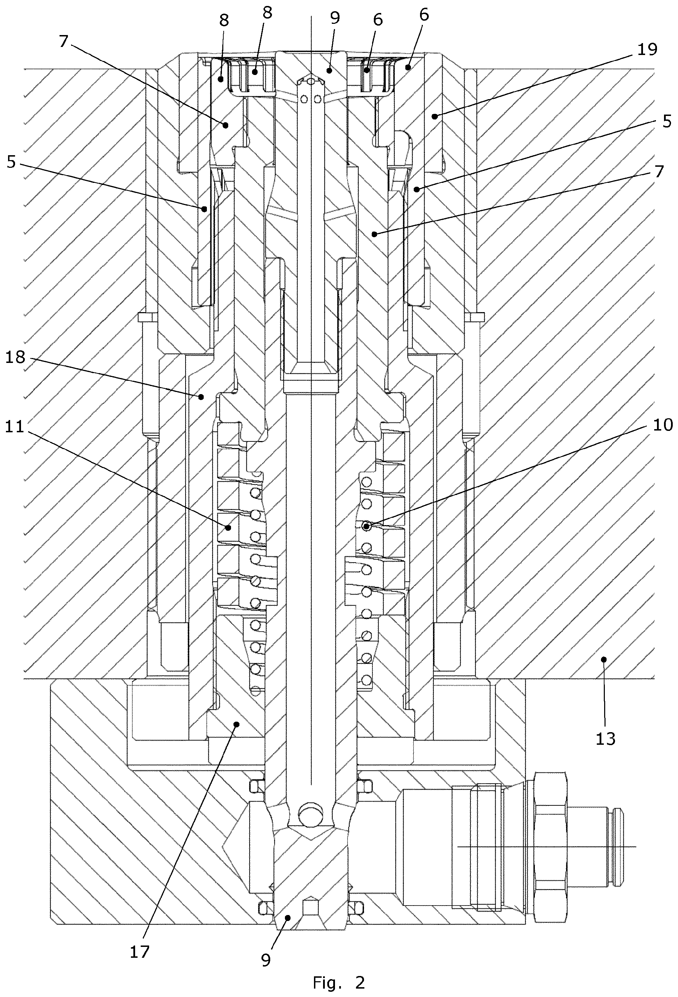

figure 2 is an enlarged detail of figure 1 (on the left) that shows the moulding die of the moulding apparatus in the configuration that precedes moulding;
figure 3 is a still more enlarged detail of figure 2;

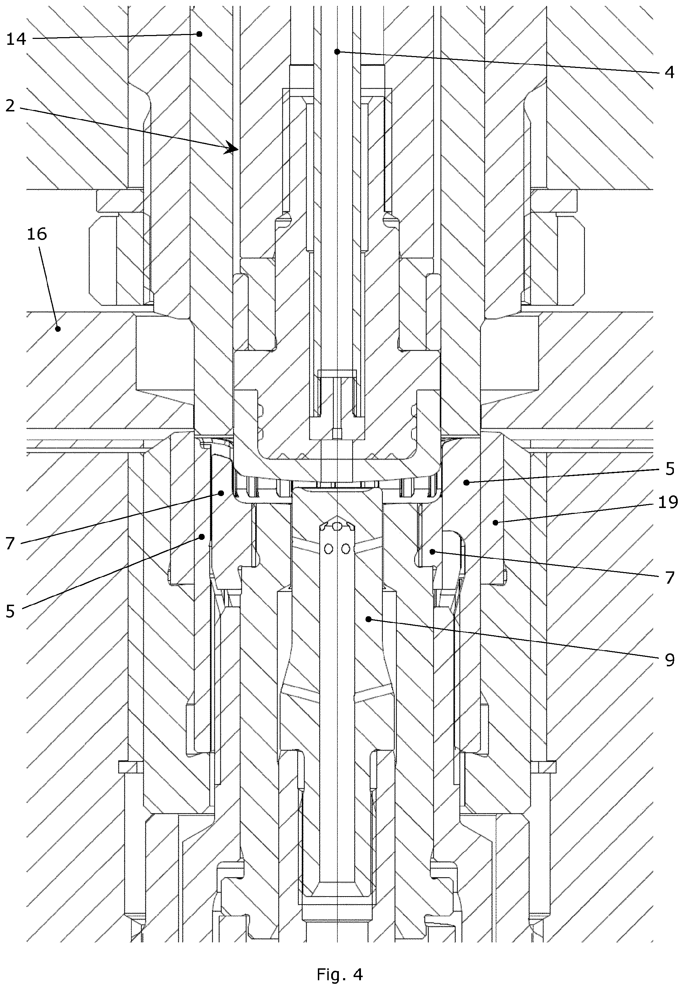

figure 4 is an enlarged detail of figure 1 (on the right) that shows the zone where the shell is moulded between the punch and the die of the moulding apparatus in the moulding configuration;

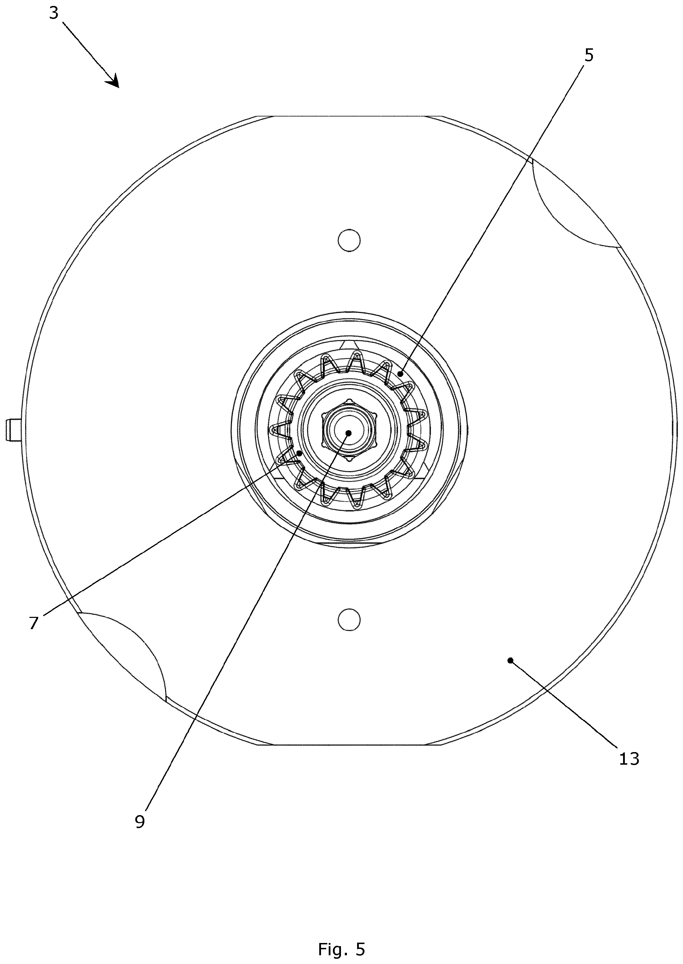

figure 5 is a top plan view of the moulding die of figure 2;

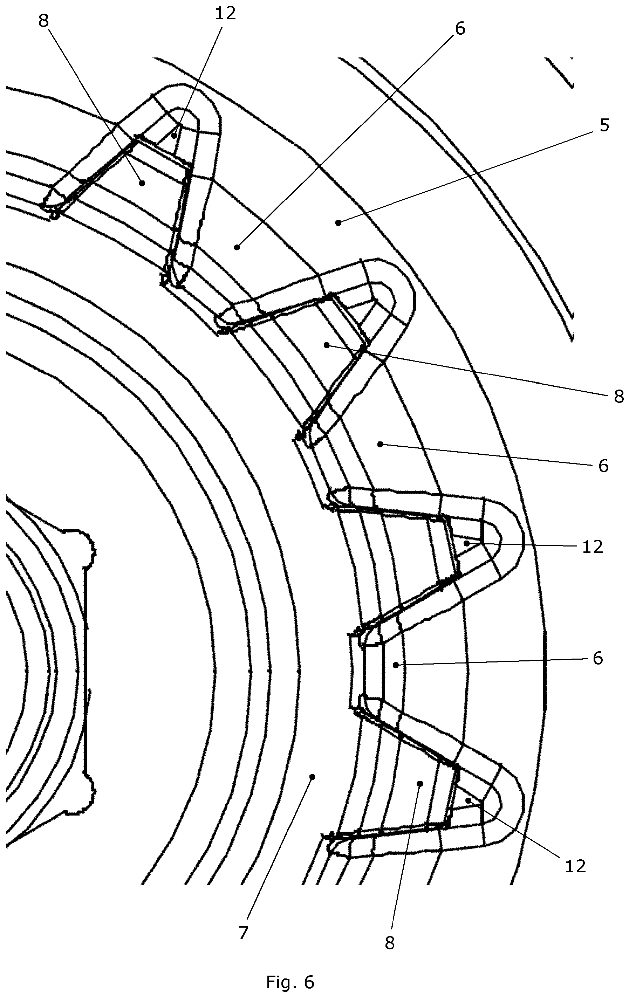

figure 6 is an enlarged detail of figure 5.

### Detailed description

With reference to the aforesaid figures, with 1 a moulding apparatus has been indicated overall for moulding a crown shell of a crown closure for closing containers.

The moulding apparatus 1 comprises at least one moulding punch 2 (in this example an upper half mould) and at least one moulding die 3 (in this embodiment a lower half mould) cooperating together. The moulding punch 2 and the at least one moulding die 3 cooperate together to perform moulding by plastic deformation of a sheet of material, in particular of a sheet of metal sheet to form a (metal) shell of the crown closure.

The material used to make the crown shell can comprise, in particular, a metal sheet metal, for example the so-called "black band" sheet metal, or steel sheet, or cold-rolled sheet metal, or coated sheet metal, or stainless-steel sheet metal, or aluminium sheet metal, or sheets of other materials.

The moulding die 3 comprises a die body that defines a cavity suitable for moulding the crown shell along a moulding axis 4.

The cavity defined by the die 3 comprises an open side (in this example an upper side of the cavity) to enable the punch 2 to enter the cavity in an entry direction along the moulding axis 4. In this example, the punch 2 enters the moulding cavity vertically from top to bottom.

The die body defines a number N of recesses arranged in a circumferential manner around the moulding axis 4. The number N can be, in particular, an odd number lower than nineteen. The number N can be, in particular, an odd number lower than seventeen. The number N can be, in particular, equal to fifteen. The number N can be, in particular, equal to thirteen.

The die body is configured to form a number N of corrugations of a corrugated skirt wall of the shell of the crown closure. The corrugations comprise, in particular, a series of protrusions arranged circumferentially and alternating with recesses so as to form the crown of the shell of the crown closure. The shape of each corrugation can be, in particular, equal to the shape of the other corrugations.

The die body comprises at least one body external part 5 with a number N of teeth 6.

The die body comprises at least one body internal part 7 with a number N of protrusions 8. Each protrusion 8 of the body internal part 7 is arranged in a space comprised between two adjacent teeth 6 of the external part 5.

The teeth 6 and the protrusions 8 form a series of elements inserted into one another, or elements engaging with one another, distributed as a crown, circumferentially, around the moulding axis 4, to enable moulding by plastic deformation of the N corrugations that will form the crown shell.

In particular, the teeth 6 of the external part 5 of the die body protrude radially to the moulding axis 4 that passes through the centre of the moulding cavity.

The protrusions 8 of the internal part 7 of the die body are shaped and arranged inside the respective spaces between the teeth 6 of the external part 5 of the die body so as to leave the aforesaid N recesses defined that are configured to form the N corrugations on the crown shell.

Each tooth 6 can protrude, in particular, radially inwards, where "radially" means with reference to the moulding axis 4.

Each protrusion 8 can, in particular, extend axially, where "axially" means with reference to the moulding axis 4.

The body external part 5 and the body internal part 7 are movable axially to one another (where "axially" means with reference to the moulding axis 4) so that also the protrusions 8 of the internal part 7 and the teeth 6 of the external part 5 are axially movable with respect to each other.

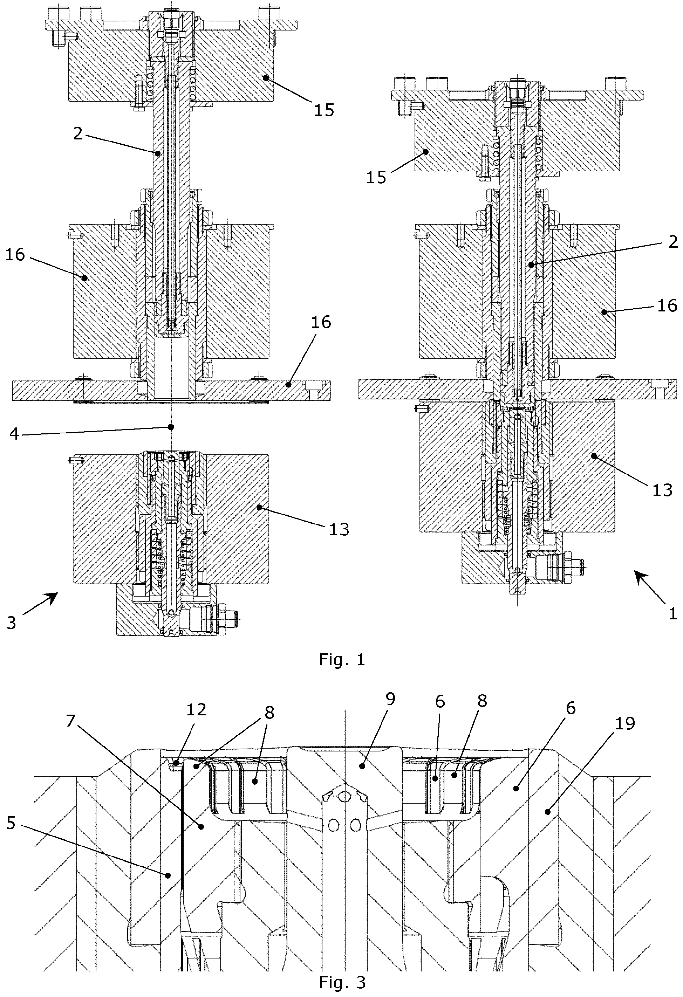

In particular, it is possible to provide for each protrusion 8 being configured to adopt, during moulding (in particular during reciprocal axial movement between the punch 2 and the die 3) an initial position (on the left in figure 1, where this initial position of the protrusions 8 is, in particular, an upper position) and a final position (on the right in figure 1, where this final position of the protrusions 8 is, in particular, a lower position).

In particular, it is possible to provide for each protrusion 8 in the final position being moved axially (i.e.in a direction parallel to the moulding axis 4), with respect to the initial position, in the entry direction of entry of the punch 2 into the cavity of the die 3. This entry direction can be, as in the specific example, a downward vertical direction.

The moulding die 3 comprises a core 9. The core 9 is arranged at least partially inside the cavity of the die 3. The core 9 can be, in particular, arranged at the centre of the cavity of the die 3.

The core 9 can be, in particular, arranged at least partially inside a hole obtained in the centre of the internal part 7 of the die body. The core 9 is movable axially with respect to the die body.

The core 9 can be configured, in particular, to cooperate with the punch 2 and with the die body in the plastic deformation of the sheet of material (sheet metal) in order to form the shell of the crown closure.

The core 9 can further perform a function of expelling the shell at the end of moulding.

The core 9 can be, in particular, movable (axially) with respect to the die body with the possibility of adopting at least one first position and at least one second position. The core 9 can be, in particular, movable axially with respect to the internal part 7 of the die body. The core 9 can be, in particular, slidable axially within the hole obtained in the internal part 7 of the die body.

The moulding die 3 comprises first elastic means 10. The first elastic means 10 are arranged, to keep the core 9 axially engaged with the die body. The first elastic means 10 can be arranged, in particular, to push the core 9 to abut on an abutting surface arranged on the internal part 7 of the die body. The first elastic means 10 can comprise, in particular, a coil spring.

In the aforesaid first position of the core, the core 9 can be, in particular, engaged axially (in particular, abutting on an abutting surface) with the body through the effect of the action of first elastic means 10. In the first position the core 9 can be, in particular, axially engaged with the internal part 7 of the die body.

In the first position, the core 9 (which can protrude axially and centrally with respect to the internal part 7 of the die body) can start to receive an axial thrust from the punch 2 during moulding.

After the core 9 has started to receive the axial thrust from the punch 2 during moulding, the core 9 moves away from the abutting surface on the body internal part 7 and thus no longer abuts on the die body.

In the aforesaid second position of the core 9, the core 9 is axially disengaged from the die body through the effect of an axial thrust (caused by the action of the punch 2) opposing the action of the first elastic means 10.

The moulding die 3 can comprise, in particular, second elastic means 11 arranged for maintaining the body internal part 7 engaged axially with the body external part 5 (in particular, abutting on an abutting surface arranged on the body external part 5). The second elastic means 11 can comprise, in particular, a coil spring.

The body internal part 7 can be, in particular, movable with respect to the body external part 5 with the possibility of adopting (during moulding) at least one initial position and at least one final position.

In the initial position the body internal part 7 can be, in particular, engaged axially with the body external part 5 (abutting) through the effect of the action of the second elastic means 11.

In the final position, the body internal part 7 can be, in particular, axially disengaged from the body external part 5 (at a distance from the abutting surface arranged on the body external part 5) through the effect of an axial thrust (for example, caused by the moulding action between punch 2 and die 3) opposing the action of the second elastic means 11.

The body internal part 7 can be, in particular, movable during moulding from the initial position to the final position with an axial movement that is concordant with an axial movement of entry of the punch 2 into the cavity defined by the die body of the die 3.

Each protrusion 8 can be, in particular, movable (during moulding) with the possibility of adopting at least one initial position and at least one final position.

Each protrusion 8 can be, in particular, movable during moulding from the initial position to the final position with an axial movement that is concordant with an axial movement of entry of the punch 2 into the aforesaid cavity.

Each protrusion 8 can be, in particular, moved axially from the initial position to the final position during moulding through the effect of a thrust exerted by the punch 2 not directly, i.e. not by a direct contact between the punch 2 and the die 3, but by a contact between the shell, which is undergoing plastic deformation under the action of the punch 2, and the body internal part.

The moulding die 3 can comprise, in particular, a recess 12 for each protrusion 8.

Each recess 12 can be, in particular, bounded radially internally by an outer surface of an end portion of the respective protrusion 8. Each recess 12 can be, in particular, bounded circumferentially on two opposite sides by the two teeth 6 between which the respective protrusion 8 is arranged. Each recess 12 can be, in particular, bounded radially externally by an internal surface of a portion of the body external part 5.

The body internal part 7 can comprise, in particular, an annular portion integral (for example, made as a single piece) with the aforesaid protrusions 8. The protrusions 8 can, in particular, emerge axially from the aforesaid annular portion.

The moulding die 3 can comprise, in particular, a support structure 13 that supports the external part 5 and the internal part 7 of the die body and that supports the core 9. The support structure 13 can be movable, by movement means (not shown), in a direction parallel to the moulding axis 4. The support structure 13 can perform, in particular, an upward movement (for example, from the position on the left of figure 1 to the position on the right of figure 1) to bring the elements of the die 3 near a moulding zone.

The first elastic means 10 can be interposed, in particular, between the support structure 13 and the core 9. The core 9 can be supported elastically by the support structure 13 by means of the first elastic means 10.

In an initial position before moulding (upper position of the core 9 with respect to the die body), in particular in the position on the left of figure 1, in which the core 9 is supported elastically by the support structure 13 by means of the first elastic means 10, the core 9 has an upper end which is arranged in the moulding cavity defined by the die 3 and which protrudes upwards with respect to a bottom of the moulding cavity emerging from a hole obtained in the internal part 7 of the die body. In this initial position, the core 9 has an abutting surface abutting on an abutting surface arranged on the internal part 7. The abutting surface arranged on the internal part 7 abutting on the core 9 can, in particular, face downwards.

The second elastic means 11 can be interposed, in particular, between the support structure 13 and the internal part 7 of the die body.

In an initial position before moulding, in particular in the position on the left of figure 1, in which the body internal part 7 is supported elastically by the support structure 13 by means of the second elastic means 11, the body internal part 7 has an abutting surface abutting on an abutting surface arranged on the external part 5. The abutting surface arranged on the internal part 7 abutting on the external part 5 can, in particular, face upwards.

Each of the two aforesaid abutting surfaces arranged on the body internal part 7 (i.e. the abutting surface facing downwards abutting on the core 9 and the abutting surface facing upwards abutting on the external part 5) can be arranged in a lower end portion of the internal part 7.

The moulding apparatus 1 can comprise, in particular, a tubular element 14 that surrounds the punch 2.

The tubular element 14 can be, in particular, configured to perform a drawing sheet metal holder function and/or a sheet metal shear function.

The tubular element 14 can be, in particular, configured to interact during moulding in contact with the external part 5 of the die body.

The tubular element 14 can be, in particular, configured to interact during moulding in contact with an abutting surface of an annular portion of the external part 5 of the die body (with a drawing sheet metal holder function).

It is possible to provide, in particular, for an axial distance being defined between the body external part 5 and the aforesaid tubular element 14, in particular when the tubular element 14 performs a sheet metal shear function.

The moulding apparatus 1 can comprise, in particular, a support structure 15 that supports the punch 2 and can be movable, by movement means (not shown), in a direction parallel to the moulding axis 4. The support structure 15 can perform, in particular, a descent movement (for example, from the position on the left of figure 1 to the position on the right of figure 1) to bring a lower end of the punch 2 near the moulding zone.

The moulding apparatus 1 can comprise, in particular, a frame 16 that can be fixed in a vertical direction and that includes the moulding zone. The punch 2 can be, in particular, slidingly coupled with the frame 16. During moulding, it is possible to provide, as in the specific example disclosed here, for moulding occurring both in an axial movement (for example, ascent) of the die 3, and an axial movement (for example, descent) of the punch 2, i.e. joint movements of mutual approach of the punch 2 and of the die 3 to the shell moulding zone.

The frame 16 can be, in particular, a frame of a moulding carousel that rotates around a vertical rotation axis and that carries a plurality of moulding apparatuses 1 arranged spaced angularly apart from one another.

It is possible to provide, as in this example for the first elastic means 10 being fitted to a fixing element 17 (for example, a fixing ring nut) removably coupled, for example by a screw coupling, with a tubular portion 18 that is in turn coupled with the external part 5 of the die body.

It is possible to provide, as in this example, for the second elastic means 11 being fitted to a fixing element 17 (for example, a fixing ring nut) removably coupled, for example by a screw coupling, with a tubular portion 18 that is in turn coupled with the body external part 5 of the die body.

It is possible to provide, as in this example, for the first elastic means 10 and the second elastic means 11 being fitted to the same fixing element 17.

The tubular portion 18 can comprise, in particular, the aforesaid abutting surface (abutting through the effect of the second elastic force exerted by the second elastic means 11 in the initial position before moulding) with the abutting surface arranged on the internal part 7 of the die body.

The die 3 can comprise, in particular, a shearing portion 19 arranged to shear (in an initial step that precedes moulding) a disk of sheet metal that will then be moulded by drawing. The shearing portion 19 can be arranged around the die body, in particular so as to surround the external part 5 of the die body. The shearing portion 19 can comprise, in particular, at least one portion in the form of a cylindrical sleeve.

As said, the punch 2 can be, in particular, configured to move each protrusion 8 from an initial position to a final position during moulding of the shell through the effect of an axial thrust exerted by the interposition and via the shell itself.

In operation, after shearing a disk of sheet metal in cooperation with the shearing portion 19, the punch 2, by entering the moulding cavity, will start to deform the disk of sheet metal that has just been sheared to obtain the shell by drawing.

By entering the moulding cavity (or also before entering, if the upper end of the core 9 protrudes beyond the cavity) the punch 2 will also enter into a thrust relationship with the core 9, i.e. will start to push the core 9 downwards, in contrast with the first elastic means 10. This thrust relationship of the punch 2 with the core 9 occurs with the interposition of the material of the shell (i.e. of the sheet metal). The abutting surface of the core 9, initially in contact with the body internal part 7, will then move away from the abutting surface on the internal part 7.

By continuing the reciprocal axial movement between the punch 2 and die 3, so that the punch 2 proceeds in entering the moulding cavity by going in deeper, the punch 2 will also come into a thrust relationship with the internal part 7, i.e. will start to push the internal part 7 downwards, in contrast with the second elastic means 11. This thrust relationship of the punch 2 with the body internal part 7 occurs with the interposition of the material of the shell (i.e. of the sheet metal). The abutting surface of the body internal part 7, which was initially in contact with the abutting surface of the body external part 5, will then be moved away from the abutting surface of the body external part 5 through the effect of this thrust.

As has been seen, in this example, the material of the shell (sheet metal) whilst it is deformed comes into contact with the core 9 and with the body internal part 7 and pushes the core 9 and the body internal part 7 downwards.

The first elastic means 10 and the second elastic means 11 are configured, in particular, to exert respectively a first axial elastic force on the core 9 and a second axial elastic force on the internal part 7.

It is possible to perform a moulding adjustment (in particular, an adjustment of the drawing depth performed by the punch 2 with respect to the die 3 to make the shell) by an adjustment of the preload and of the stiffness of the first elastic means 10 and/or of the second elastic means 11, so that by increasing the preload and/or the stiffness of the first elastic means 10 and/or of the second elastic means 11 drawing depth decreases, and vice versa.

### Legend:

- 1: moulding apparatus
- 2: punch
- 3: die
- 4: moulding axis
- 5: external part of the die body
- 6: teeth of the external part of the die body
- 7: internal part of the die body
- 8: protrusions of the internal part of the die body
- 9: core
- 10: first elastic means
- 11: second elastic means
- 12: recesses
- 13: support structure
- 14: tubular element
- 15: support structure
- 16: frame
- 17: fixing element
- 18: tubular portion
- 19: shearing portion

## Claims

1. Moulding die (3), comprising a die body (5; 7), a core (9) and first elastic means (10), said die body defining a cavity suitable for moulding a shell of a crown closure along a moulding axis (4), said cavity comprising an open side to allow a punch (2) to enter said cavity, said die body being configured to form a number N of corrugations of a corrugated skirt wall of the shell, said die body comprising at least one body external part (5) with a number N of teeth (6) arranged circumferentially around said moulding axis (4) and at least one body internal part (7) with a number N of protrusions (8) arranged circumferentially around said moulding axis (4), each protrusion (8) being arranged in a space between two adjacent teeth (6), said moulding die (3) being **characterized in that** said body external part (5) and said body internal part (7) are axially movable with respect to each other so that said protrusions (8) and said teeth (6) are axially movable with respect to each other, said core (9) being axially movable with respect to said die body, said first elastic means (10) being arranged to exert a first elastic force capable of maintaining said core (9) axially engaged with said die body (5; 7).

2. Die according to claim 1, wherein said core (9) is movable with the possibility of adopting a first position, in which said core (9) is axially engaged with said die body (5; 7), in particular with said body internal part (7), by said first elastic means (10) and in which said core (9) can start to receive an axial thrust from the punch (2) during moulding, and a second position, wherein said core (9) is axially disengaged from said die body through the effect of an axial thrust in opposition to said first elastic force exerted by said first elastic means (10).

3. Die according to claim 1 or 2, wherein said core (9) is arranged at least partially inside said cavity.

4. Die according to any one of the preceding claims, comprising second elastic means (11) arranged to exert a second elastic force on said body internal part (7); said second elastic force being, in particular, able to keep said body internal part (7) engaged axially with said body external part (5).

5. Die according to claim 4, wherein said body internal part (7) is movable with respect to said body external part (5) with the possibility of adopting an initial position, in which said body internal part (7) is axially engaged with said body external part (5) by said second elastic means (11), and a final position, in which said body internal part (7) is axially disengaged from said body external part (5) through the effect of an axial thrust in opposition to said second elastic force exerted by said second elastic means (11); it being provided, in particular, that said body internal part (7) is movable during moulding from said initial position to said final position with an axial movement that is concordant with an axial movement of entry of the punch (2) into said cavity.

6. Die according to any one of the preceding claims, wherein each protrusion (8) is movable with the possibility of adopting an initial position and a final position and is movable during moulding from said initial position to said final position with an axial movement that is concordant with an axial movement of entry of the punch (2) into said cavity.

7. Die according to claim 6, wherein each protrusion (8) can be moved axially from said initial position to said final position through the effect of an axial thrust exerted by the punch (2) by means of a contact between the shell and said body internal part (7) during moulding.

8. Die according to any one of the preceding claims, comprising, for each protrusion (8), a recess (12) radially internally delimited by an outer surface of an end portion of the respective protrusion (8), said recess (12) being delimited circumferentially on two opposite sides by the two teeth (6) between which the respective protrusion (8) is arranged, said recess (12) being delimited radially externally by an internal surface of a portion of said body external part (5).

9. Die according to any one of the preceding claims, wherein said body internal part (7) comprises an annular portion integral with said protrusions (8) and from which said protrusions (8) emerge axially.

10. Die according to any one of the preceding claims, wherein said number N is an odd number less than nineteen, or less than seventeen.

11. Moulding apparatus (1) of a crown closure, said moulding apparatus comprising a punch (2) and a die (3), said die being made according to any one of the preceding claims, said punch being configured to enter said cavity during moulding.

12. Apparatus according to claim 11, comprising a tubular element (14) which surrounds the punch (2) and which is configured to interact during moulding with said body external part (5) to perform a sheet metal holder function.

13. Apparatus according to claim 11, comprising a tubular element (14) which surrounds the punch (2) and which performs a sheet metal shear function.

14. Apparatus according to any one of claims 11 to 13, wherein said punch (2) is configured to exert an axial thrust which is capable of moving each protrusion (8) from an initial position to a final position during moulding of the shell and which is transmitted through the shell.

## Patentansprüche

1. Formwerkzeug (3), umfassend einen Werkzeugkörper (5; 7), einen Kern (9) und erste elastische Mittel (10), wobei der Werkzeugkörper einen Hohlraum definiert, der zum Formen einer Schale eines Kronenverschlusses entlang einer Formachse (4) geeignet ist, der Hohlraum umfassend eine offene Seite, um einem Stempel (2) zu erlauben, in den Hohlraum einzutreten, wobei der Werkzeugkörper konfiguriert ist, um eine Zahl N an Riffelungen einer geriffelten Schürzenwand der Schale auszubilden, der Werkzeugkörper umfassend mindestens ein Körperaußenteil (5) mit einer Zahl N an Zähnen (6), die umlaufend um die Formachse (4) herum angeordnet sind, und mindestens ein Körperinnenteil (7) mit einer Zahl N an Vorsprüngen (8), die umlaufend um die Formachse (4) herum angeordnet sind, wobei jeder Vorsprung (8) in einem Raum zwischen zwei angrenzenden Zähnen (6) angeordnet ist, wobei das Formwerkzeug (3) **dadurch gekennzeichnet ist, dass** das Körperaußenteil (5) und das Körperinnenteil (7) in Bezug aufeinander axial bewegbar sind, so dass die Vorsprünge (8) und die Zähne (6) in Bezug aufeinander axial bewegbar sind, wobei der Kern (9) in Bezug auf den Werkzeugkörper axial bewegbar ist, wobei die ersten elastischen Mittel (10) angeordnet sind, um eine erste elastische Kraft auszuüben, die zum Aufrechterhalten des axialen Eingriffs des Kerns (9) mit dem Werkzeugkörper (5; 7) imstande ist.

2. Werkzeug nach Anspruch 1, wobei der Kern (9) mit der Möglichkeit zum Einnehmen einer ersten Position, in der der Kern (9) mit dem Werkzeugkörper (5; 7), insbesondere mit dem Körperinnenteil (7), durch die ersten elastischen Mittel (10) axial in Eingriff steht und in der der Kern (9) beginnen kann, während des Formens einen axialen Schub von dem Stempel (2) zu erhalten, und einer zweiten Position bewegbar ist, wobei der Kern (9) mit dem Werkzeugkörper durch die Wirkung eines axialen Schubs entgegen der durch die ersten elastischen Mittel (10) ausgeübten ersten elastischen Kraft axial außer Eingriff steht.

3. Werkzeug nach Anspruch 1 oder 2, wobei der Kern (9) mindestens teilweise innerhalb des Hohlraums angeordnet ist.

4. Werkzeug nach einem der vorstehenden Ansprüche, umfassend zweite elastische Mittel (11), die angeordnet sind, um eine zweite elastische Kraft auf das Körperinnenteil (7) auszuüben; wobei die zweite elastische Kraft insbesondere in der Lage ist, das Körperinnenteil (7) mit dem Körperaußenteil (5) axial in Eingriff zu halten.

5. Werkzeug nach Anspruch 4, wobei das Körperinnenteil (7) in Bezug auf das Körperaußenteil (5) mit der Möglichkeit zum Einnehmen einer Anfangsposition, in der das Körperinnenteil (7) mit dem Körperaußenteil (5) durch die zweiten elastischen Mittel (11) axial in Eingriff steht, und einer Endposition bewegbar ist, in der das Körperinnenteil (7) mit dem Körperaußenteil (5) durch die Wirkung eines axialen Schubs entgegen der durch die zweiten elastischen Mittel (11) ausgeübten zweiten elastischen Kraft axial außer Eingriff steht; wobei insbesondere bereitgestellt ist, dass das Körperinnenteil (7) während des Formens von der Anfangsposition in die Endposition mit einer axialen Bewegung bewegbar ist, die mit einer axialen Eintrittsbewegung des Stempels (2) in den Hohlraum übereinstimmt.

6. Werkzeug nach einem der vorstehenden Ansprüche, wobei jeder Vorsprung (8) mit der Möglichkeit zum Einnehmen einer Anfangsposition und einer Endposition bewegbar ist und während des Formens von der Anfangsposition in die Endposition mit einer axialen Bewegung bewegbar ist, die mit einer axialen Eintrittsbewegung des Stempels (2) in den Hohlraum übereinstimmt.

7. Werkzeug nach Anspruch 6, wobei jeder Vorsprung (8) von der Anfangsposition in die Endposition durch die Wirkung eines axialen Schubs axial bewegt werden kann, der durch den Stempel (2) mittels einer Berührung zwischen der Schale und dem Körperinnenteil (7) während des Formens ausgeübt wird.

8. Werkzeug nach einem der vorstehenden Ansprüche, umfassend, für jeden Vorsprung (8), eine Aussparung (12), die durch eine äußere Oberfläche eines Endabschnitts des jeweiligen Vorsprungs (8) radial innen abgegrenzt ist, wobei die Aussparung (12) auf zwei entgegengesetzten Seiten durch die zwei Zähne (6) umlaufend abgegrenzt ist, zwischen denen der jeweilige Vorsprung (8) angeordnet ist, wobei die Aussparung (12) durch eine innere Oberfläche eines Abschnitts des Körperaußenteils (5) radial außen abgegrenzt ist.

9. Werkzeug nach einem der vorstehenden Ansprüche, wobei das Körperinnenteil (7) einen ringförmigen Abschnitt umfasst, der in die Vorsprünge (8) integriert ist und aus dem die Vorsprünge (8) axial hervortreten.

10. Werkzeug nach einem der vorstehenden Ansprüche, wobei die Zahl N eine ungerade Zahl kleiner als neunzehn oder kleiner als siebzehn ist.

11. Formeinrichtung (1) für einen Kronenverschluss, die Formeinrichtung umfassend einen Stempel (2) und ein Werkzeug (3), wobei das Werkzeug nach einem der vorstehenden Ansprüche hergestellt ist, wobei der Stempel konfiguriert ist, um während des Formens in den Hohlraum einzutreten.

12. Einrichtung nach Anspruch 11, umfassend ein rohrförmiges Element (14), das den Stempel (2) umgibt und das konfiguriert ist, um während des Formens mit dem Körperaußenteil (5) zusammenzuwirken, um eine Blechhaltefunktion zu erfüllen.

13. Einrichtung nach Anspruch 11, umfassend ein rohrförmiges Element (14), das den Stempel (2) umgibt und das eine Blechscherfunktion erfüllt.

14. Einrichtung nach einem der Ansprüche 11 bis 13, wobei der Stempel (2) konfiguriert ist, um einen axialen Schub auszuüben, der imstande ist, jeden Vorsprung (8) während des Formens der Schale von einer Anfangsposition in eine Endposition zu bewegen, und der durch die Schale übertragen wird.

## Revendications

1. Matrice de moulage (3), comprenant un corps de matrice (5; 7), un noyau (9) et des premiers moyens élastiques (10), ledit corps de matrice définissant une cavité adaptée au moulage d'une coque d'une capsule couronne le long d'un axe de moulage (4), ladite cavité comprenant un côté ouvert pour permettre à un poinçon (2) de pénétrer dans ladite cavité, ledit corps de matrice étant conçu pour former un nombre N d'ondulations d'une paroi de jupe ondulée de la coque, ledit corps de matrice comprenant au moins une partie externe de corps (5) avec un nombre N de dents (6) agencées circonférentiellement autour dudit axe de moulage (4) et au moins une partie interne de corps (7) avec un nombre N de protubérances (8) agencées circonférentiellement autour dudit axe de moulage (4), chaque protubérance (8) étant agencée dans un espace entre deux dents (6) adjacentes, ladite matrice de moulage (3) étant **caractérisée en ce que** ladite partie externe de corps (5) et ladite partie interne de corps (7) sont axialement mobiles l'une par rapport à l'autre de sorte que lesdites protubérances (8) et lesdites dents (6) soient axialement mobiles les unes par rapport aux autres, ledit noyau (9) étant axialement mobile par rapport audit corps de matrice, lesdits premiers moyens élastiques (10) étant agencés pour exercer une première force élastique capable de maintenir ledit noyau (9) en prise axiale avec ledit corps de matrice (5; 7).

2. Matrice selon la revendication 1, dans laquelle ledit noyau (9) est mobile avec la possibilité d'adopter une première position, dans laquelle ledit noyau (9) est en prise axiale avec ledit corps de matrice (5; 7), en particulier avec ladite partie interne de corps (7), par lesdits premiers moyens élastiques (10) et dans laquelle ledit noyau (9) peut commencer à recevoir une poussée axiale du poinçon (2) pendant le moulage, et une seconde position, dans laquelle ledit noyau (9) est désolidarisé axialement dudit corps de matrice par l'effet d'une poussée axiale en opposition à ladite première force élastique exercée par lesdits premiers moyens élastiques (10).

3. Matrice selon la revendication 1 ou 2, dans laquelle ledit noyau (9) est agencé au moins partiellement à l'intérieur de ladite cavité.

4. Matrice selon l'une quelconque des revendications précédentes, comprenant des seconds moyens élastiques (11) agencés pour exercer une seconde force élastique sur ladite partie interne de corps (7); ladite seconde force élastique étant, en particulier, capable de maintenir ladite partie interne de corps (7) en prise axiale avec ladite partie externe de corps (5).

5. Matrice selon la revendication 4, dans laquelle ladite partie interne de corps (7) est mobile par rapport à ladite partie externe de corps (5) avec la possibilité d'adopter une position initiale, dans laquelle ladite partie interne de corps (7) est en prise axiale avec ladite partie externe de corps (5) par lesdits seconds moyens élastiques (11), et une position finale, dans laquelle ladite partie interne de corps (7) est désolidarisée axialement de ladite partie externe de corps (5) par l'effet d'une poussée axiale en opposition à ladite seconde force élastique exercée par lesdits seconds moyens élastiques (11); étant entendu, en particulier, que ladite partie interne de corps (7) est mobile pendant le moulage de ladite position initiale à ladite position finale avec un mouvement axial qui est concordant avec un mouvement axial d'entrée du poinçon (2) dans ladite cavité.

6. Matrice selon l'une quelconque des revendications précédentes, dans laquelle chaque protubérance (8) est mobile avec la possibilité d'adopter une position initiale et une position finale et est mobile pendant le moulage de ladite position initiale à ladite position finale avec un mouvement axial qui est concordant avec un mouvement axial d'entrée du poinçon (2) dans ladite cavité.

7. Matrice selon la revendication 6, dans laquelle chaque protubérance (8) peut être déplacée axialement de ladite position initiale à ladite position finale par l'effet d'une poussée axiale exercée par le poinçon (2) au moyen d'un contact entre la coque et ladite partie interne de corps (7) pendant le moulage.

8. Matrice selon l'une quelconque des revendications précédentes, comprenant, pour chaque protubérance (8), un évidement (12) radialement délimité intérieurement par une surface externe d'une partie d'extrémité de la protubérance (8) respective, ledit évidement (12) étant délimité circonférentiellement sur deux côtés opposés par les deux dents (6) entre lesquelles est agencée la protubérance (8) respective, ledit évidement (12) étant délimité radialement extérieurement par une surface interne d'une partie de ladite partie externe de corps (5).

9. Matrice selon l'une quelconque des revendications précédentes, dans laquelle ladite partie interne de corps (7) comprend une partie annulaire solidaire desdites protubérances (8) et de laquelle émergent axialement lesdites protubérances (8).

10. Matrice selon l'une quelconque des revendications précédentes, dans laquelle ledit nombre N est un nombre impair inférieur à dix-neuf, ou inférieur à dix-sept.

11. Appareil de moulage (1) d'une capsule couronne, ledit appareil de moulage comprenant un poinçon (2) et une matrice (3), ladite matrice étant fabriquée selon l'une quelconque des revendications précédentes, ledit poinçon étant conçu pour pénétrer dans ladite cavité pendant le moulage.

12. Appareil selon la revendication 11, comprenant un élément tubulaire (14) qui entoure le poinçon (2) et qui est conçu pour interagir pendant le moulage avec ladite partie externe de corps (5) pour effectuer une fonction de support de feuille de métal.

13. Appareil selon la revendication 11, comprenant un élément tubulaire (14) qui entoure le poinçon (2) et qui effectue une fonction de cisaillement de feuille de métal.

14. Appareil selon l'une quelconque des revendications 11 à 13, dans lequel ledit poinçon (2) est conçu pour exercer une poussée axiale qui est capable de déplacer chaque protubérance (8) d'une position initiale à une position finale pendant le moulage de la coque et qui est transmise à travers la coque.
